# EUROPEAN PATENT SPECIFICATION

(11) **EP 1 135 626 B1**
(45) Date of publication and mention of the grant of the patent: **27.10.2004**
(21) Application number: 99959239.7
(22) Date of filing: 06.12.1999
(51) Int. Cl.: F16F 9/32, F16F 9/36, F16J 1/00, B23P 15/10

(54) **A PISTON OR PLUNGER AND A METHOD FOR MAKING THE SAME**
KOLBEN UND VERFAHREN ZU SEINER HERSTELLUNG
PISTON OU PLONGEUR ET PROCEDE DE FABRICATION CORRESPONDANT

(30) Priority: 04.12.1998 DK 1598
(43) Date of publication of application: 26.09.2001
(73) Proprietor: Trelleborg Sealing Solutions Denmark A/S, 3000 Helsingor (DK)
(72) Inventor: TONNDORFF, Agge, Jan, DK-2830 Virum (DK); JENSEN, Leo, DK-3140 Alsgarde (DK)
(74) Representative: Vingtoft, Knud Erik
(86) International application number: PCT/DK1999/000683
(87) International publication number: WO 2000/034681

(56) References cited:
- EP-A- 0 658 611
- DE-U- 9 017 933
- FR-A- 2 481 969
- GB-A- 2 072 797
- US-A- 3 212 411
- US-A- 5 070 971
- US-A- 5 520 092
- US-A- 5 588 350
- PATENT ABSTRACTS OF JAPAN vol. 012, no. 098 (M-680), 31 March 1988 (1988-03-31) & JP 62 231725 A (DAIDO METAL KOGYO KK), 12 October 1987 (1987-10-12)
- PATENT ABSTRACTS OF JAPAN vol. 010, no. 257 (M-513), 3 September 1986 (1986-09-03) & JP 61 082072 A (NOK CORP), 25 April 1986 (1986-04-25)
- PATENT ABSTRACTS OF JAPAN vol. 010, no. 304 (M-526), 16 October 1986 (1986-10-16) & JP 61 116135 A (TOYOTA MOTOR CORP), 3 June 1986 (1986-06-03)
- PATENT ABSTRACTS OF JAPAN vol. 010, no. 176 (M-491), 20 June 1986 (1986-06-20) & JP 61 025730 A (YOUBEA LE-RON KOGYO KK), 4 February 1986 (1986-02-04)

## Description

The present invention relates to a method of making a piston or plunger which comprises a piston body defining a peripheral surface part thereon and a sealing member made from a deformable material and being in tight engagement with said peripheral surface part. Such pistons or plungers may co-operate with pneumatic or hydraulic cylinders or may form part of any kind of piston pump. As an example, a piston or plunger of this type may be used in shock absorbers for cars or other vehicles.

US patent No. 3,212,411 discloses a piston of the above type. The known piston includes a metal piston body having annular grooves formed in an outer peripheral surface part thereof by machining. A sealing member blank made from a thin sheet of polytetrafluoroethylene (PTFE) is pressed and deformed into tight engagement with the outer peripheral surface part of the piston body and into the annular grooves formed therein by means of a heated sizing tube with a tapered entrance. After treatment in the heated sizing tube, the piston body with the sealing member formed thereon is immediately introduced into a cooling tube wherein the sealing member is maintained in a confined condition with respect to the grooved surface part of the piston member.

Thus, according to the prior art a metal piston body blank is made by a moulding process, such as by casting or metal powder sintering. In the moulding process the piston body is formed with a smooth outer peripheral surface. Subsequently, a plurality of annular, peripherally extending, axially spaced channels or grooves are formed in the piston body blank by machining, such as by turning. The need for separately forming the grooves in the peripheral surface of the piston body substantially increases the production costs of the piston or plunger.

The present invention provides a method of making a piston or plunger of the above type in a more economical manner.

Thus, the present invention provides a method of making a piston or plunger which comprises a piston body defining a peripheral surface part thereon and a sealing member made from a deformable material and being in tight engagement with said peripheral surface part, said method comprising: forming the piston body, forming grooves or depressions in the peripheral surface part of the piston body, applying an annular sealing member blank around said piston body, and deforming the sealing member blank into tight engagement with the peripheral surface part and into the grooves or depressions formed therein so as to form the shape of said sealing member in situ on the piston body, and the method according to the invention is characterised in that the grooves or depressions are formed so as to extend axially in an inner and/or outer peripheral surface part of the piston body with the axially extending grooves or depressions is formed by a moulding process.

It has been found that the sealing member may be safely retained on the peripheral surface of the piston body by the engagement of the sealing member with the axially extending grooves even when exposed to the axial forces usually occurring during use. Because the grooves or depressions extend axially they may be formed while the piston body is being moulded in a simple two-part mould, and no subsequent machining is necessary.

EP 0 658 611 discloses a piston body for a shock absorber. This piston body has a peripheral surface part having axially extending grooves or channels formed therein for engaging with a sealing member. However, this prior teaches that the sealing member should be applied to the piston body by inserting the piston body into an injection moulding machine by injection moulding the sealing member on the peripheral surface part of the piston body.

The annular sealing member blank may, for example, be a disk or tube, or it may have any other suitable form, such as a strip or band or a piece of sheet material, which - in an annular shape - is applied to an outer and/or inner peripheral surface part of the piston body. When the sealing member blank is applied to an inner peripheral surface part the piston or plunger formed may be in the form of an annular guiding member surrounding and sealingly engaging with a reciprocating shaft or a piston rod. When the sealing member blank is applied to an outer peripheral surface part, the sealing member blank is preferably an annular member having an inner diameter not exceeding the maximum outer diameter of the outer peripheral surface part of the piston body.

The axially extending grooves or depressions formed in the peripheral surface part may be closed at both ends. In a preferred embodiment, however, each axially extending groove or depression has an open end. In that case the mould, in which the piston body is formed, may be divided into mould parts which may be moved between open and closed positions in the axial direction of the piston body being formed. The open ends of the grooves or depressions may be positioned at opposite ends of the piston body or at the same end of the body. As an other possibility, the axially extending channels or grooves may be parallel and helical. In this case the mould parts may be moved from their closed to their open position after moulding of a piston body by a combined axial and rotational movement.

The annular sealing member blank which is applied to the piston member may be a substantially flat member which is made or cut from sheet material, for example by punching, or which may be made by cutting slices from a tubular member. The sealing member blank need not be a disc-like member, but could also be a tubular member or may be in the form of a strip, disk or band. When the sealing member blank has been applied to the peripheral surface part of the piston body, it is exposed to radially directed forces so as to deform the blank into engagement with said peripheral surface part. Thus, an annular which should be applied to an outer piston body surface may be passed onto the piston body via a tapered member having its wide end positioned in abutting engagement with one end of the piston body, and the sealing member blank may be deformed by means of a compression tool having an opening defined therein with a diameter exceeding the maximum outer diameter of the piston body, the piston body with the sealing member blank arranged thereon being moved axially in relation to the compression tool through the opening thereof, so as to deform the sealing member blank into the grooves or depressions of the piston body.

The present invention also provides a piston or plunger comprising a piston body, which defines a peripheral surface part with axially extending grooves or depressions therein, and which has been formed by a moulding process without subsequent machining, and an annular sealing member made from a deformable material and being in tight engagement with said peripheral surface part and extending into said grooves or depressions, so as to retain the sealing member in position on the piston body, and the piston or plunger according to the invention is characterised in that the annular sealing member has been applied to an inner and/or outer peripheral surface part of the piston body and brought into engagement with the grooves or depressions therein by plastic deformation.

The piston body may be made from metal, such as by casting, extrusion or pressure moulding and/or sintering, or the piston may be made from any other suitable material, such as hard plastic material. The sealing member is preferably made from PTFE or another suitable thermoplast. Each of the grooves or depressions may, for example, have an open end and may extend axially therefrom, and these open ends of the grooves or depressions may either be located at the same or at opposite ends of the piston body. The axially extending grooves or depressions may be parallel with the axis of the piston body being formed or may extend helically in relation to the axis of the piston body.

The invention will now be further described with reference to the drawing, wherein
Fig. 1 is a perspective view of a piston body forming part of the piston or plunger according to the invention,
Fig. 2 is a front end view of the piston body shown in Fig. 1,
Fig. 3 is a side view of the piston body shown in Figs. 1 and 2,
Fig. 4 illustrates how a sealing member blank may be mounted on a piston body of the type shown in Figs. 1-3,
Fig. 5 is a sectional view showing an embodiment of the piston or plunger according to the invention,
Fig. 6 is a side view of a second embodiment of the piston body,
Fig. 7 is an end view of the piston body shown in Fig. 6,
Fig. 8 is a perspective view of the piston body shown in Figs. 6 and 7, and
Figs. 9-11 are axial sectional views of three further embodiments of the piston or plunger according to the invention.

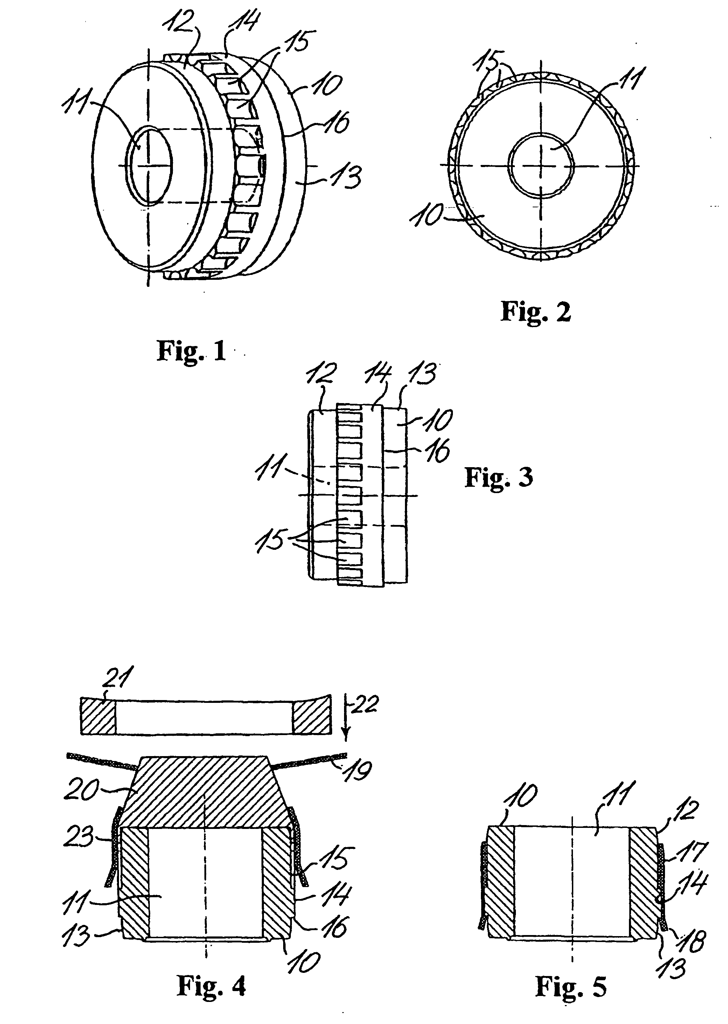

The piston body 10 shown in Figs. 1-3 has been formed integrally, for example from metal, in a mould (not shown) by casting or by compression and sintering metal powder or metal particles, or by any other conventional moulding process.

The piston body 10, which has a central bore 11, comprises first and second axial end sections 12 and 13 and an intermediate central section 14. The end sections 12 and 13 define peripheral outer surface parts, which are substantially cylindrical or slightly tapered. Also the central section 14 defines a cylindrical outer surface part, and the maximum diameter of the central section exceeds the maximum diameters of the end sections 12 and 13. A plurality of closely spaced, axially extending grooves or depressions 15 are formed in the peripheral outer surface of the central section 14. These depressions or grooves 15 are open at the end adjacent to the first section 12 while they are closed at the other end. The maximum radial depth of each depression or groove 15 preferably corresponds substantially to the difference between the maximum radius of the central section 14 and the maximum radius of the first end section 12.

An annular shoulder 16 is formed between the adjacent end of the central section 14 and the second end section 13. It is understood that the piston body illustrated in Figs. 1-3 could be formed in the mould cavity of a mould, which is divided into two parts, which are movable along the axis of the piston body being formed between open and closed positions. Such mould part could be separated at the shoulder 16. This means that the piston body shown in Fig. 3 could be formed to its final shape in such a mould.

The embodiment of the piston body according to the invention shown in Figs. 1-3 may be formed into a piston or plunger comprising the piston body 10 and a sealing member 17 of a plastic material, such as polytetraflourethylene (PTFE), which has been applied to the peripheral surface of the piston body 10 and which has a sealing lip 18 at one end, vide Fig. 5.

The sealing member 17 may be mounted on the piston body 10 in a manner known per se and as illustrated in Fig. 4. An annular disc-like sealing member blank 19 made for example from polytetraflourethylene (PTFE) is placed around the narrow end of a frusto-conical mounting tool 20. The wider end of the mounting tool 20 has a diameter corresponding to the outer diameter of the first end section 12 and is positioned in abutting engagement with the end surface of the first end section as shown in Fig. 4. An annular, disc-like female mandrel 21 having an inner diameter slightly exceeding the maximum outer diameter of the central section 14 of the piston body 10 is moved axially around the mounting tool 20 and the piston body 10 as illustrated by an arrow 22 in Fig. 4. Thereby, the disc-like sealing member blank 19 is converted into a tubular shape 23 by plastic deformation. When the mandrel 21 has been moved axially along the total length of the piston body 10 the sealing member blank 19 has been converted into the sealing member 17 shown in Fig. 5. The piston or plunger may then be exposed to further treatment.

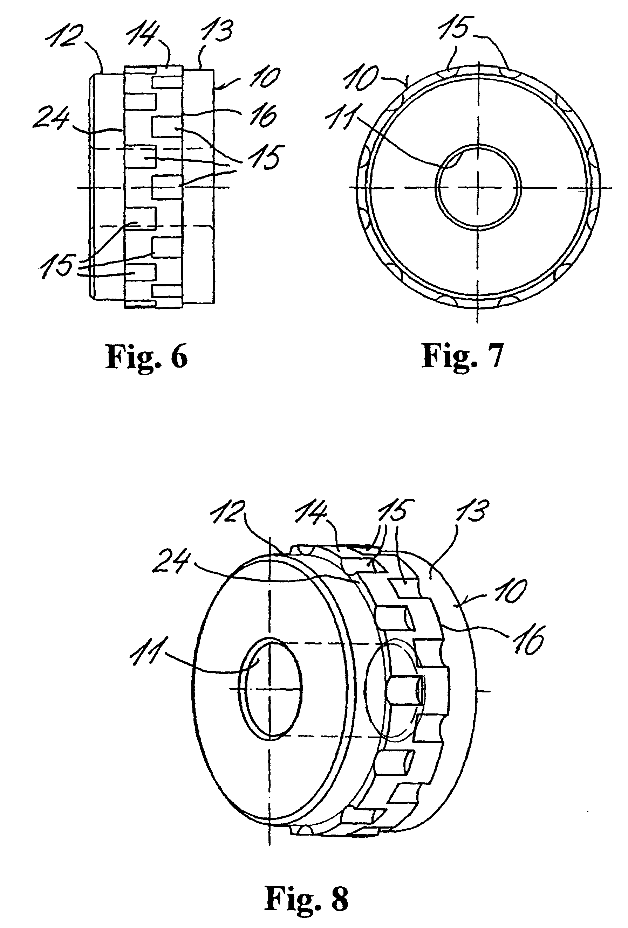

Figs. 6-8 illustrate a further embodiment of the piston body 10, in which the pattern of depressions or grooves 15 formed in the central section 14 of the piston body has been changed. Thus, in the embodiment shown in Figs. 6-8 the grooves 15 are arranged in two axially displaced annular arrangements. In one of these annular arrangements each of the grooves 15 opens into the annular shoulder 16, and in the other arrangement each of the grooves 15 opens into an annular shoulder 24, while the other end is closed. As illustrated in Figs. 6-8 each of the grooves 15 in one of the arrangements is positioned between a pair of adjacent, peripherally spaced grooves in the other arrangement.

A piston body 10 as illustrated in Figs. 6-8 may be provided with a sealing member in the manner described above in connection with Figs. 4 and 5 or in any conventional manner, for example as disclosed in the above mentioned US patent 3,212,411.

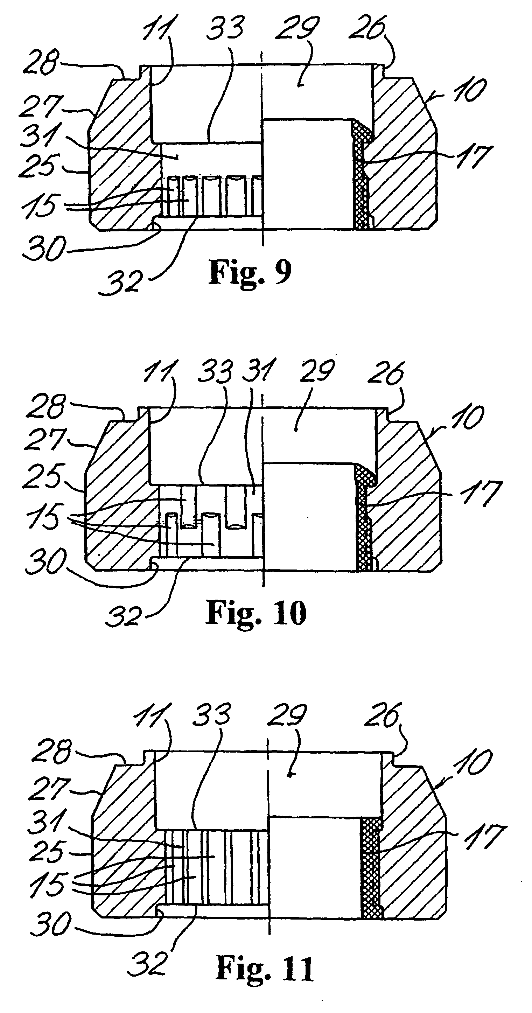

Figs. 9-11 illustrate three different embodiments of the piston or plunger according to the invention and of the type used for sealingly guiding a reciprocating shaft or piston rod. In all of the embodiments the piston comprises a piston body 10 having a central opening or bore 11. The piston body or sealing body 10 has an outer surface comprising a large diameter cylindrical surface section 25 at one end, and a small diameter cylindrical surface section 26 at the other end. An intermediate conical surface section 27 and an annular radial shoulder 28 interconnect the cylindrical sections 25 and 26.

The central opening or bore 11 comprises a cylindrical inner surface section 29 at one end, a shorter cylindrical inner surface section 30 at the opposite end, and an intermediate cylindrical inner surface section 31 having a diameter which is smaller than that of the sections 29 and 30. A plurality of peripherally spaced depressions or grooves 15 are formed in the intermediate surface section 31. The inner diameter of the inner surface sections 29 and 30 is substantially the same, and the radial depth of each grooved is less than, but preferably substantially equal to the difference between the inner radius of the surface sections 29 and 30 and the inner radius of the intermediate surface section 31. This means that the bottom of each groove 15 is substantially aligned with the inner surface section(s) 29 and/or 30.

In Figs. 9, 10, and 11 the grooves 15 are arranged differently. In Fig. 9 all of the grooves 15 extend axially from a closed end to an open end opening into a radial shoulder 32 formed between the inner surface sections 30 and 31. In Fig. 10 the grooves 15 are arranged in two axially displaced annular arrangements. In one of these annular arrangements each of the grooves 15 opens into the radial shoulder 32, and in the other arrangement each of the grooves 15 opens into an annular shoulder 33 formed between the inner surface sections 29 and 31, while the opposite end of each groove 15 is closed. As illustrated in Fig. 10 each of the grooves 15 in one of the arrangements is positioned between a pair of adjacent, peripherally spaced grooves in the other arrangement. In the embodiment illustrated in Fig. 11 each of the peripherally spaced, axially extending grooves 15 is open at both ends and extends between the radial shoulders 32 and 33.

The embodiments of the piston body 10 shown in Figs. 9-11 may be formed into a sealing device or plunger comprising the piston body 10 and an inner sealing member 17 of polytetraflourethylene (PTFE) or another suitable plastic material. The sealing member 17 may be mounted in the piston or sealing body 10 in a manner similar to that illustrated in Fig. 4. An annular sealing member blank may be placed around the narrow end frusto-conical section of a heated mounting mandrel also having a cylindrical section with an outer diameter corresponding to the desired inner diameter of the finally mounted sealing member. When the mandrel is forced into the inner bore 11 of the piston body the sealing member blank is converted into the tubular sealing member 17 by plastic deformation in a well-known manner. A piston or sealing device of the type shown in Figs. 9-11 may be stationary and sealingly encircle a reciprocating shaft or a piston rod.

### EXAMPLE

The piston shown in Fig. 5 may be used as a piston in a conventional shock absorber for use in cars and other vehicles. The axial grooves 15 may have a length being up to 95% of the axial length of the central section 14. The combined peripheral width of all the grooves 15 may cover up to 90% of the circumference of the central section 14. Each of the grooves 15 may have any cross-sectional shape. Thus, the walls defining the grooves may be curved or plane, and the peripheral width of each groove may increase or be substantially the same in an outward radial direction. The radial depth of each groove 15 may be up to 150% of the thickness of the disc-like sealing member blank 19 which is made from polytetraflourethylene or another suitable plastic material. The polyethylene or plastic material may possibly have particles of bronze or other filler incorporated therein. The mounting of the sealing member blank 19 illustrated in Fig. 4 takes place at a temperature between 20 and 100°C and the effective outer diameter of the piston or plunger thus produced (Fig 5.) may then be calibrated by exposing the piston to a suitable temperature between 150 and 260°C.

## Claims

1. A method of making a piston or plunger which comprises a piston body (10) defining a peripheral surface part (12-14, 29-31) thereon and a sealing member (17) made from a deformable material and being in tight engagement with said peripheral surface part, said method comprising:
forming the piston body (10),
forming grooves or depressions (15) in the peripheral surface part of the piston body,
applying an annular sealing member blank (19) around said piston body, and
deforming the sealing member blank into tight engagement with the peripheral surface part and into the grooves or depressions formed therein so as to form the shape of said sealing member in situ on the piston body,
**characterised in that** the grooves or depressions (15) are formed so as to extend axially in an inner and/or outer peripheral surface part (14, 31) of the piston body (10), and that the piston body with the axially extending grooves or depressions is formed by a moulding process.

2. A method according to claim 1, wherein the sealing member blank (17) is an annular member, which is applied to an outer peripheral surface part (12-14, 29-31), the annular member having an inner diameter not exceeding the maximum outer diameter of the outer peripheral surface part of the piston body.

3. A method according to claim 1 or 2, wherein each axially extending groove or depression (15) is formed with an open end.

4. A method according to claim 3, wherein the open ends of the grooves or depressions are located at the same end of the piston body.

5. A method according to any of the claims 1-4, wherein the sealing member blank is an annular, substantially flat member (19) cut from sheet material.

6. A method according to any of the claims 1-4, wherein the sealing member blank is tubular.

7. A method according to any of the claims 1-6, wherein the sealing member blank has an annular shape, the outer diameter of the sealing member blank exceeding the minimum inner diameter of an inner peripheral surface part on the piston body.

8. A method according to any of the claims 1-7, wherein the sealing member blank is exposed to radially directed forces so as to deform the blank into engagement with the peripheral surface part of the piston body.

9. A method according to claim 2, wherein the sealing member blank (19) is passed onto the piston body (10) via a tapered member (20) having its wide end positioned in abutting engagement with one end of the piston body.

10. A method according to any of the claims 2 and 8, wherein the sealing member blank (19) is deformed by means of a compression tool (21) having an opening defined therein with a diameter exceeding the maximum outer diameter of the piston body (10), the piston body with the sealing member blank arranged thereon being moved axially in relation to the compression tool through the opening thereof, so as to deform the sealing member blank into the grooves or depressions (15) of the piston body.

11. A piston or plunger comprising
a piston body (10), which defines a peripheral surface part (14, 31) with axially extending grooves or depressions (15) therein, and which has been formed by a moulding process without subsequent machining, and
an annular sealing member (17) made from a deformable material and being in tight engagement with said peripheral surface part and extending into said grooves or depressions, so as to retain the sealing member in position on the piston body,
**characterised in that** the annular sealing member (17) has been applied to an inner and/or outer peripheral surface part of the piston body (10) and brought into engagement with the grooves or depressions (15) therein by plastic deformation.

12. A piston or plunger according to claim 11, wherein each groove or depression (15) has an open end.

13. A piston or plunger according to claim 12, wherein the open ends of the grooves or depressions are located at the same end of the piston body.

14. A piston or plunger according to any of the claims 11-13, wherein the axially extending grooves or depressions are helical.

15. A piston or plunger according to any of the claims 11-14, wherein the piston body is made from metal.

## Patentansprüche

1. Verfahren zum Herstellen eines Kolbens oder Plungers, welcher einen Kolbenkörper (10), der ein Umfangsoberflächenteil (12-14, 29-31) darauf definiert, und ein Abdichtungsteil (17), welches aus einem verformbaren Material hergestellt ist und sich in einem engen Eingriff mit dem Umfangsoberflächenteil befindet, umfasst, wobei das Verfahren umfasst:
Ausbilden des Kolbenkörpers (10),
Ausbilden von Aushöhlungen oder Vertiefungen (15) in dem Umfangsoberflächenteil des Kolbenkörpers,
Aufbringen eines ringförmigen Abdichtungsteilrohlings (19) um den Kolbenkörper herum, und
Verformen des Abdichtungsteilrohlings in einen engen Eingriff mit dem Umfangsoberflächenteil und in die darin ausgebildeten Aushöhlungen oder Vertiefungen (15), um derart an Ort und Stelle die Form des Abdichtungsteils auf dem Kolbenkörper auszubilden,
**dadurch gekennzeichnet,**
**dass** die Aushöhlungen oder Vertiefungen (15) derart ausgebildet werden, dass sie sich axial in einem inneren und/oder äußeren Umfangsoberflächenteil (14, 31) des Kolbenkörpers (10) erstrecken, und
**dass** der Kolbenkörper mit den sich axial erstreckenden Aushöhlungen oder Vertiefungen durch ein Formgebungsverfahren ausgebildet wird.

2. Verfahren nach Anspruch 1, wobei der Abdichtungsteilrohling (17) ein ringförmiges Teil ist, welches auf ein äußeres Umfangsoberflächenteil (12-14, 29-31) aufgebracht wird, wobei das ringförmige Teil einen Innendurchmesser aufweist, welcher nicht größer als das Maximum eines Außendurchmessers des äußeren Umfangsoberflächenteils des Kolbenkörpers ist.

3. Verfahren nach Anspruch 1 oder 2, wobei jede sich axial erstreckende Aushöhlung oder Vertiefung (15) mit einem offenen Ende ausgebildet wird.

4. Verfahren nach Anspruch 3, wobei die offenen Enden der Aushöhlungen oder Vertiefungen an demselben Ende des Kolbenkörpers angeordnet werden.

5. Verfahren nach einem der Ansprüche 1-4, wobei der Abdichtungsteilrohling ein ringförmiges, im Wesentlichen flaches und aus einem Folienmaterial geschnittenes Teil (19) ist.

6. Verfahren nach einem der Ansprüche 1-4, wobei der Abdichtungsteilrohling röhrenförmig ist.

7. Verfahren nach einem der Ansprüche 1-6, wobei der Abdichtungsteilrohling eine ringförmige Form aufweist, wobei der Außendurchmesser des Abdichtungsteilrohlings größer als das Minimum eines Innendurchmessers eines inneren Umfangsoberflächenteils des Kolbenkörpers ist.

8. Verfahren nach einem der Ansprüche 1-7, wobei der Abdichtungsteilrohling radial gerichteten Kräften derart ausgesetzt wird, dass der Rohling in einen Eingriff mit dem Umfangsoberflächenteil des Kolbenkörpers verformt wird.

9. Verfahren nach Anspruch 2, wobei der Abdichtungsteilrohling (19) über ein abgeschrägtes Teil (20) mit einem breiten Ende, welches in einem aneinanderstoßenden Eingriff mit einem Ende des Kolbenkörpers angeordnet ist, auf den Kolbenkörper (10) geführt wird.

10. Verfahren nach einem der Ansprüche 2 und 8, wobei der Abdichtungsteilrohling (19) mittels eines Presswerkzeuges (21), welches eine Öffnung darin mit einem Durchmesser aufweist, welcher größer als der maximale Außendurchmesser des Kolbenkörpers (10) ist, verformt wird, wobei der Kolbenkörper mit dem darauf angeordneten Abdichtungsteilrohling axial in Relation zu dem Presswerkzeug durch die Öffnung davon derart bewegt wird, dass der Abdichtungsteilrohling in die Aushöhlungen oder Vertiefungen (15) des Kolbenkörpers verformt wird.

11. Kolben oder Plunger, umfassend
einen Kolbenkörper (10), welcher ein Umfangsoberflächenteil (14, 31) mit sich axial darin erstreckenden Aushöhlungen oder Vertiefungen (15) definiert, und welcher durch ein Formungsverfahren ohne nachfolgende Bearbeitung ausgebildet worden ist, und
ein ringförmiges Abdichtungsteil (17), welches aus einem verformbaren Material hergestellt ist und sich in einem engen Eingriff mit dem Umfangsoberflächenteil befindet und sich in den Aushöhlungen oder Vertiefungen derart erstreckt, dass das Abdichtungsteil in Position auf dem Kolbenkörper gehalten wird,
**dadurch gekennzeichnet,**
**dass** das ringförmige Abdichtungsteil (17) an einem inneren und/oder äußeren Umfangsoberflächenteil des Kolbenkörpers (10) aufgebracht worden ist und durch eine plastische Verformung in einen Eingriff mit den Aushöhlungen oder Vertiefungen (15) gebracht worden ist.

12. Kolben oder Plunger nach Anspruch 11, wobei jede Aushöhlung oder Vertiefung (15) ein offenes Ende aufweist.

13. Kolben oder Plunger nach Anspruch 12, wobei die offenen Enden der Aushöhlungen oder Vertiefungen an demselben Ende des Kolbenkörpers angeordnet sind.

14. Kolben oder Plunger nach einem der Ansprüche 11-13, wobei die sich axial erstreckenden Aushöhlungen oder Vertiefungen spiralförmig sind.

15. Kolben oder Plunger nach einem der Ansprüche 11-14, wobei der Kolbenkörper aus Metall hergestellt ist.

## Revendications

1. Procédé de fabrication d'un piston ou d'un piston plongeur qui comprend un corps de piston (10) définissant une partie de surface périphérique (12 - 14, 29 - 31) sur celui-ci et un élément formant joint (17) composé à partir d'un matériau déformable et étant en mise en prise étroite avec ladite partie de surface périphérique, ledit procédé consistant à :
former le corps de piston (10),
former des rainures ou des dépressions (15) dans la partie de surface périphérique du corps de piston,
appliquer une ébauche d'élément formant joint annulaire (19) autour dudit corps de piston, et
déformer l'ébauche d'élément formant joint en mise en prise étroite avec la partie de surface périphérique et dans les rainures ou les dépressions formées à l'intérieur de manière à réaliser la forme dudit élément formant joint in situ sur le corps de piston,
**caractérisé en ce que** les rainures ou dépressions (15) sont formées de façon à s'étendre de manière axiale dans une partie de surface périphérique intérieure et/ou extérieure (14, 31) du corps de piston (10), et **en ce que** le corps de piston avec les rainures ou dépressions s'étendant de manière axiale est formé par une méthode de moulage.

2. Procédé selon la revendication 1, dans lequel l'ébauche d'élément formant joint (17) est un élément annulaire qui est appliqué à une partie de surface périphérique extérieure (12 - 14, 29 - 31), l'élément annulaire présentant un diamètre intérieur ne dépassant pas le diamètre extérieur maximum de la partie de surface périphérique extérieure du corps de piston.

3. Procédé selon la revendication 1 ou 2, dans lequel chaque rainure ou dépression s'étendant de manière axiale (15) est formée avec une extrémité ouverte.

4. Procédé selon la revendication 3, dans lequel les extrémités ouvertes des rainures ou dépressions sont situées au niveau de la même extrémité du corps de piston.

5. Procédé selon l'une quelconque des revendications 1 à 4, dans lequel l'ébauche d'élément formant joint est un élément annulaire sensiblement plat (19) découpé à partir d'une tôle.

6. Procédé selon l'une quelconque des revendications 1 à 4, dans lequel l'ébauche d'élément formant joint est tubulaire.

7. Procédé selon l'une quelconque des revendications 1 à 6, dans lequel l'ébauche d'élément formant joint présente une forme annulaire, le diamètre extérieur de l'ébauche d'élément formant joint dépassant le diamètre intérieur minimum d'une partie de surface périphérique intérieure sur le corps de piston.

8. Procédé selon l'une quelconque des revendications 1 à 7, dans lequel l'ébauche d'élément formant joint est exposée à des forces dirigées de manière radiale de manière à déformer l'ébauche en mise en prise avec la partie de surface périphérique du corps de piston.

9. Procédé selon la revendication 2, dans lequel l'ébauche d'élément formant joint (19) est passée sur le corps de piston (10) par l'intermédiaire d'un élément effilé (20) présentant son extrémité large positionnée en mise en prise de butée avec une extrémité du corps de piston.

10. Procédé selon l'une quelconque des revendications 2 et 8, dans lequel l'ébauche d'élément formant joint (19) est déformée au moyen d'un outil de compression (21) présentant une ouverture définie à l'intérieur avec un diamètre dépassant le diamètre extérieur maximum du corps de piston (10), le corps de piston avec l'ébauche d'élément formant joint disposée dessus étant déplacé de manière axiale en relation par rapport à l'outil de compression à travers l'ouverture de celui-ci, de manière à déformer l'ébauche d'élément formant joint dans les rainures ou les dépressions (15) du corps de piston.

11. Piston ou piston plongeur comprenant :
un corps de piston (10) qui définit une partie de surface périphérique (14, 31) avec des rainures ou des dépressions s'étendant de manière axiale (15) à l'intérieur, et qui a été formé par une méthode de moulage sans usinage ultérieur, et
un élément formant joint annulaire (17) composé à partir d'un matériau déformable et étant en mise en prise étroite avec ladite partie de surface périphérique et s'étendant dans lesdites rainures ou dépressions, de manière à retenir l'élément formant joint en position sur le corps de piston, **caractérisé en ce que** l'élément formant joint annulaire (17) a été appliqué à une partie de surface périphérique intérieure et/ou extérieure du corps de piston (10) et amené en prise avec les rainures ou dépression (15) à l'intérieur par déformation plastique.

12. Piston ou piston plongeur selon là revendication 11, dans lequel chaque rainure ou dépression (15) présente une extrémité ouverte.

13. Piston ou piston plongeur selon la revendication 12, dans lequel les extrémités ouvertes des rainures ou dépressions sont situées au niveau de la même extrémité du corps de piston.

14. Piston ou piston plongeur selon l'une quelconque des revendications 11 à 13, dans lequel les rainures ou les dépressions s'étendant de manière axiale sont hélicoïdales.

15. Piston ou piston plongeur selon l'une quelconque des revendications 11 à 14, dans lequel le corps de piston est composé de métal.
